# EUROPEAN PATENT SPECIFICATION

(11) **EP 0 763 979 B1**
(45) Date of publication and mention of the grant of the patent: **09.04.2003**
(21) Application number: 94922026.3
(22) Date of filing: 27.06.1994
(51) Int. Cl.: A23G 3/30, C11B 9/02

(54) **METHOD FOR REFINING SPEARMINT OILS AND CHEWING GUM MADE FROM SAME**
VERFAHREN ZUM RAFFINIEREN VON PFEFFERMINZÖLE UND KAUGUMMI DARAUS
PROCEDE DE RAFFINAGE D'ESSENCES DE MENTHE VERTE ET CHEWING GUM PRODUIT A PARTIR DE CELLES-CI

(43) Date of publication of application: 26.03.1997
(73) Proprietor: WM. WRIGLEY JR. COMPANY, Chicago Illinois 60611-4287 (US)
(72) Inventor: JOHNSON, Sonya S., Brookfield, IL 60513 (US); COPPER, Charles M., Woodridge, IL 60517 (US)
(74) Representative: Hayes, Adrian Chetwynd
(86) International application number: US9407217
(87) International publication number: WO96000014

(56) References cited:
- EP-A- 0 349 186
- US-A- 2 712 008
- US-A- 3 083 105
- US-A- 4 613 513
- US-A- 4 708 880
- US-A- 5 030 459
- US-A- 5 116 625

## Description

### BACKGROUND OF THE INVENTION

The present invention relates to methods for refining mint flavors and using same in chewing gum.

It is known in the chewing gum industry to add mint flavoring to chewing gum. For example, it is known to add spearmint oil to chewing gum. In addition to adding desirable taste characteristics to the chewing gum, such mint flavoring can add perceived breath freshening properties.

A number of mint flavored chewing gums, however, have a tendency to produce bitter flavor notes in the latter part of a chew. This is due, in part, to the fact that most, if not all, of the sweetness properties have been dissipated. This causes more of the mint flavor to become apparent, as well as the bitterness.

One method for reducing bitterness is disclosed in U.S. patent 5,372,824 published December 13, 1994 and entitled: "MINT FLAVORED CHEWING GUM HAVING REDUCED BITTERNESS AND METHODS FOR MAKING SAME." In that application, a method is provided for producing mint flavored chewing gums having reduced bitterness. In part, that application discloses a chewing gum including a water insoluble base portion, a water soluble portion, and a mint flavor agent from which at least a portion of 1-menthol has been removed.

Other patents and patent applications have considered modifying the formulation of chewing gum to deal with the undesirable properties of mint flavoring. These patents and published PCT patent applications include: 4,948,595; 4,889,726; 5,041,294; 5,298,238; 5,128,154; 4,708,880; 4,980,169; 4,613,513; PCT 90-006689; and PCT 91-00547.

Another issue raised by mint flavor oils, such as spearmint oil, is that initially they typically include sulfur containing compounds such as dimethyl sulfide. In attempting to create a more palatable spearmint oil, spearmint oil compositions can be distilled to remove dimethyl sulfide and other sulfur compounds.

The typical distillation process in addition to removing sulfur containing components also removes desirable low boiling point spearmint oil components. For example, 3-methylbutanal is a desirable component of most spearmint flavors; 3-methylbutanal imparts creamy, chocolate notes to the flavor. Due to its low boiling point, distillation also removes 3-methylbutanal in addition to other desirable components. It is therefore necessary for the manufacturer when refining spearmint oil to separate these desirable low boiling spearmint oil components from the distillate and add them back to the flavor. This increases the cost and time of the distillation process.

There is therefore a need for an improved method for refining spearmint oil.

US-A-5,116,625 describes a method from sparging off-notes from mist flavours using nitrogen. EP-A-349,186 describes the extraction of oils from mint plants using supercritical carbon dioxide.

### SUMMARY OF THE INVENTION

The present invention provides an improved method for refining spearmint oil containing compositions. Additionally, the present invention provides an improved method for making chewing gum having a spearmint flavor.

The present invention provides a method for refining a spearmint oil containing composition that includes sulfur compounds to remove at least a portion of the sulfur compounds comprising the step of:
subjecting the composition to a single vacuum distillation process while maintaining the temperature of the composition below 120°C to remove at least a portion of the sulfur compounds but not more than 3% of the total composition.

In a preferred embodiment, the composition consists essentially of spearmint oil.

In a preferred embodiment, more than 0.25% of the composition is removed by the distillation process.

In a further preferred embodiment, the pressure during the vacuum distillation process is reduced to no more than 20 kPa (150 mmHg).

In a preferred embodiment, after the distillation process, the composition includes not more than 75 ppm dimethyl sulfide.

In a preferred embodiment, the method includes the step of measuring dimethyl sulfide in the composition during the distillation process and terminating the process when the dimethyl sulfide content in the composition is less than 75 ppm.

In a preferred embodiment, the method includes the step of agitating a distillation pot including the composition during the distillation process.

In a preferred embodiment, the method includes the step of blanketing a distillation pot including the composition with an inert gas during the distillation process.

In a preferred embodiment, the level of 3-methylbutanal in the composition after distillation is not reduced below 100 ppm.

The present invention also provides a method for creating a spearmint flavor chewing gum comprising the steps of adding to an insoluble gum base portion and a water soluble portion a spearmint oil that has been refined by subjecting a spearmint oil. containing composition to a single vacuum distillation process at a temperature not according 120°C and for a sufficient time and at sufficient parameters to achieve an at least 97% yield of refined spearmint oil that has a dimethyl sulfide content of less than 75 ppm.

In an embodiment, the present invention provides a method for refining spearmint oil comprising the steps of subjecting a spearmint oil containing composition to a vacuum distillation process wherein the pressure is reduced to less than or equal to 20 kPa (150 mmHg) and the composition is not subjected to a temperature greater than 120°C and removing during the process sufficient dimethyl sulfide that may be present to provide a refined spearmint oil having a dimethyl sulfide content of less than 75 ppm.

An advantage of the present invention is that it provides an improved method for refining spearmint oil.

Another advantage of the present invention is that it provides a method for providing refined spearmint oil for use in creating chewing gum.

Furthermore, an advantage of the present invention is that it provides a method for creating mint flavored chewing gum.

Still further, an advantage of the present invention is that it provides a more economical and less labor intense method for refining spearmint oil.

Further, an advantage of the present invention is that it provides a method for refining spearmint oil that provides increased yields.

Additionally, an advantage of the present invention is that it provides an improved spearmint flavored chewing gum.

Another advantage of the present invention is that it provides a distillation process for refining spearmint oil that reduces the number of steps necessary to refine the spearmint oil.

Additional features and advantages of the present invention are described in, and will be apparent from, the detailed description of the presently preferred embodiments and from the drawings.

### DETAILED DESCRIPTION OF THE PRESENTLY PREFERRED EMBODIMENTS

The present invention provides an improved method for refining spearmint oil and spearmint oil containing compositions. Additionally, the present invention provides an improved method for making chewing gum including spearmint oil.

Pursuant to the present invention, a method is provided for refining spearmint oil and spearmint oil blends to remove sulfur compounds, as well as water, while leaving desirable low boiling point components in the undistilled fraction. Although, in an embodiment of the present invention, the spearmint oil can be used in the production of chewing gum, the present invention will have applications to the production of other mint flavored products, such as mint flavored confectionery products.

The present invention can be used to refine not only compositions that consist essentially of spearmint oil, but compositions that include a blend of spearmint oil and other flavors or mint oils. In this regard, the spearmint oil composition may include other flavors, such as peppermint oil, which may also be subjected to the process of the present invention.

Pursuant to the present invention, a method for refining spearmint oil, or spearmint oil blends, to remove sulfur components is provided comprising the step of subjecting the flavor to a distillation. Preferably, a batch vacuum distillation process is used. However, other distillation processes can be used including a continuous process vacuum distillation in which a steady state feed of field distilled oil and continuous, steady state removal of distillate and product are performed simultaneously. A spinning cone distillation can also be used in which a specialized apparatus having a series of cones spinning at high speed is used to separate the components in a continuous or batch process under vacuum.

Using the vacuum process, the vacuum distillation is performed at relatively low temperatures over a short period of time to remove 0.25% to 3% of the distillate. In a preferred embodiment, not more than 2% of the distillate is removed. In an embodiment, not more than 1% of the distillate is removed.

Due to the method of the present invention, the removed distillate will be composed of water and low boiling compounds including the sulfur compounds; in contrast to prior methods, at least a substantial portion of the desirable low boiling point spearmint oil components are not removed during the distillation process

During the distillation process, a vacuum is created that reduces the pressure during the process to less than or equal to 20kPa (150 mmHg). Preferably, it has been found that the pressure should be reduced to less than 13kPa (100 mmHg) and most preferably, less than 8kPa (60 mmHg). However, in a most preferred embodiment, the pressure is reduced to less than or equal to 2kPa (30 mmHg).

During the distillation process, in order to prevent degregation of the flavor components while insuring efficient distillation, the temperature of the oil being distilled should not exceed 120°C. Preferably, the temperature of the oil will not exceed 97°C for any extended period of time. However, it should be noted that it is acceptable for the temperature to briefly, e.g., less than approximately 20% of the total distillation time, exceed these temperatures before cooling procedures are initiated to prevent thermal degregation.

It is believed that only minimum separation effectiveness is necessary to practice the vacuum distillation of the present invention. It is possible that fractionating columns or other apparatuses having only one theoretical plate or less could be effective. Of course, columns with more theoretical plates can also be used.

The distillation pot containing the oil to be refined should be agitated during the process. This will prevent degregation that can be caused by uneven heating and other problems. A number of means can be used for agitating the distillation pot. Such means include using mechanically or magnetically driven impellers or bubbling inert gas into the oil. Other means, however, can also be used.

In an embodiment, to reduce oxidation which can occur during the distillation process, the distillation pot can be blanketed with an inert gas, such as nitrogen. This is especially useful when the vessel is repressurized after completing the distillation.

In performing the process of the present invention using stills having an adjustable reflux apparatus, the reflux setting will be determined by the characteristics of the distillation apparatus used. With some equipment, it may be desirable to set the reflux to a high return ratio until the desired starting temperature and pressure are reached. However, the apparatus will normally be set to a high collection ratio once the distillation process begins.

As previously noted, typically, dimethyl sulfide is present in spearmint oil at levels from 75 to 500 ppm (parts per million by weight). Pursuant to the present invention, the vacuum distillation process is run until the undistilled portion includes less than 75 ppm of dimethyl sulfide. Preferably, the refined spearmint oil includes less than 40 ppm of dimethyl sulfide. In a most preferred embodiment, the present invention is able to provide refined spearmint oil having less than or equal to 10 ppm by weight dimethyl sulfide.

It has been determined, through sensory testing, that spearmint oil having levels of dimethyl sulfide greater than 75 ppm are negatively perceived by experienced judges as compared to spearmint oil having less than 75 ppm dimethyl sulfide. On the other hand, however, extending the distillation point so that excessive distillation is preformed can reduce the yield and remove excessive quantities of desirable low boiling point components.

For example, as noted above, one desirable constituent that imparts creamy, chocolate notes to the spearmint flavor is 3-methylbutanal. This compound normally occurs in spearmint oil, prior to any refining process, at levels of approximately 400 to about 1,300 ppm by weight. The distillation process of the present invention should not reduce the level of this component below 100 ppm and preferably, not below 150 ppm. Indeed, it has been found that the method of the present invention can create refined spearmint oil including 3-methylbutanal at a level of 200 ppm or greater.

To determine the end point of the distillation process, a variety of methods can be used. One method is to use a sulfur detector in the distillation pot to directly measure dimethyl sulfide levels. The distillation process is then manually or automatically shut down when the desired reduction in dimethyl sulfide is reached.

If desired, a number of trial distillations can be used to determine how much distillate should be collected in the receiver to achieve the desired reduction of dimethyl sulfide while maintaining high levels of 3-methylbutanal. The amount of distillate that must be collected will probably vary with the design and scale of the equipment used, as well as the initial dimethyl sulfide level and to a lesser extent, the amount of water in the undistilled flavor. It may also desirable to establish a steady state condition in the still by running at least one or two batches to wet the initial surfaces of the distillation apparatus. In general, the amount of distillate to be collected will be approximately 0.25 to 3% of the undistilled oil.

Pursuant to the present invention, a good quality peppermint oil will yield 97 to 99.75 refined oil in a steady state batch process. In addition to the distillate removed, losses may include material loss to the vacuum pump and trap and other equipment areas. Additionally, in the first batch or two, material used to wet the internal surfaces of the distillation apparatus will also be loss. Of the 0.25 to 3% loss during the distillation process, approximately 10 to 90% will be water typically resulting in a net dry yield of approximately 98 to 99.9%.

By way of example, and not limitation, an example of a distillation process will now be given:

### EXAMPLE

A nominal 272 kg (600 pound) vacuum still equipped with a stainless steel still pot jacketed for steam heating and tap water cooling was used. A mechanically driven impeller for agitation was located in the pot. A 3m (ten foot) x 15cm (six inch) diameter glass fractionating column packed with a Koch Sulzer stainless steel mesh packing was used, as well as an adjustable reflux apparatus.

272 kg (600 pounds) of field distilled spearmint oil was used in the following process.

### Loading of System

1. Isolate vacuum pump from system and then turn on the vacuum pump.
2. Vent and recover drainings in all vessels and traps.
3. Turn on Freon pump - make sure the system is operational.
4. Turn on glycol condenser.
   - Note:: Glycol and Freon trace along distillate line to receivers should be off to prevent freezing of initial distillate.
5. Load kettle with 272 kg (600 lbs.) of field distilled spearmint oil. Take 57g (2 oz.) sample.
6. Start agitator - set at approximately 100 rpm.
7. Clean out steam trap.

### Distillation

1. Adjust vacuum valve(s) to achieve 2.7kPa (20 mm Hg). Maintain vacuum at 2.7kPa (20 mm Hg) throughout distillation.
2. Turn on steam valve to kettle. Adjust steam flow with valve to maintain a steady state boiling. Temperature rise should be 3-6°C/5 minutes.
3. Set splitter for 100% distillate take off into receiver #1. Maintain 2.7 kPa (20 mm Hg) vacuum.
4. The distillation should proceed removing low boiling components into #1 fraction receiver. Continue the distillation for 1.5 hours. The final batch temperature should be 90-95°C.

Pursuant to the present invention, the refined spearmint oil can be used to create chewing gum. In this regard, the present invention also provides a mint flavor chewing gum comprising a water insoluble base portion, a water soluble base portion, and a mint flavor agent refined pursuant to the present invention. The chewing gum may be any of a variety of different chewing gums, including low or high moisture, sugar or sugarless, wax-containing or wax-free, low calorie and/or a chewing gum that includes dental health agents.

Chewing gum generally consists of a water insoluble gum base, a water soluble portion, and flavors. The water soluble portion dissipates with a portion of the flavor over a period of time during chewing. The gum base portion is retained in the mouth throughout the chew.

The insoluble gum base generally comprises elastomers, resins, fats and oils, softeners, and inorganic fillers. The gum base may or may not include wax. The insoluble gum base can constitute 5 to 95 percent, by weight, of the chewing gum, more commonly, the gum base comprises 10 to 50 percent of the gum, and in some preferred embodiments, 20 to 35 percent, by weight, of the chewing gum.

In an embodiment, the chewing gum base of the present invention contains 20 to 60 weight percent synthetic elastomer, 0 to 30 weight percent natural elastomer, 5 to 55 weight percent elastomer plasticizer, 4 to 35 weight percent filler, 5 to 35 weight percent softener, and optional minor amounts (one percent or less) of miscellaneous ingredients such as colorants, antioxidants, etc.

Synthetic elastomers may include, but are not limited to, polyisobutylene with a GPC weight average molecular weight of 10,000 to 95,000, isobutylene-isoprene copolymer (butyl elastomer), styrene-butadiene copolymers having styrene-butadiene ratios of 1:3 to 3:1, polyvinyl acetate having a GPC weight average molecular weight of 2,000 to 90,000, polyisoprene, polyethylene, vinyl acetate-vinyl laurate copolymer having vinyl laurate content of 5 to 50 percent by weight of the copolymer, and combinations thereof.

Preferred ranges are, for polyisobutylene, 50,000 to 80,000 GPC weight average molecular weight, for styrene-butadiene, 1:1 to 1:3 bound styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is abhesive or conventional, bubble gum or regular gum, as discussed below. Preferred natural elastomers include jelutong, chicle, sorva and massaranduba balata.

Elastomer plasticizers may include, but are not limited to, natural rosin esters such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. the preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Patent No. 5,286,500, the disclosure of which is incorporated herein by reference.

In addition to a water insoluble gum base portion, a typical chewing gum composition includes a water soluble bulk portion and one or more flavoring agents. The water soluble portion can include bulk sweeteners, high intensity sweeteners, flavoring agents, softeners, emulsifiers, colors, acidulants, fillers, antioxidants, and other components that provide desired attributes.

Softeners are added to the chewing gum in order to optimize the chewability and mouth feel of the gum. The softeners, which are also known as plasticizers and plasticizing agents, generally constitute between 0.5 to 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners include both sugar and sugarless components. Bulk sweeteners typically constitute 5 to 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin, dried invert sugar, fructose, levulose, galactose, corn syrup solids, and the like, alone or in combination.

Sugarless sweeteners include, but are not limited to, sugar alcohols such as sorbitol, mannitol, xylitol, hydrogenated starch hydrolysates, maltitol, and the like, alone or in combination.

High intensity artificial sweeteners can also be used, alone or in combination with the above. Preferred sweeteners include, but are not limited to sucralose, aspartame, salts of acesulfame, alitame, saccharin and its salts, cyclamic acid and its salts, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extension may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Example of low caloric bulking agents include: polydextrose; Raftilose, Raftilin;Fructooligosaccharides(NutraFlora);Palatinose oligosaccharide; Guar Gum Hydrolysate (Sun Fiber); or indigestible dextrin (Fibersol). However, other low calorie bulking agents can be used.

A variety of flavoring agents can be used in combination with the refined mint flavor of the present invention. The flavor, which may only include the refined mint flavor, can be used in amounts of

0.1 to 15 weight percent of the gum, and preferably, 0.3 to 5%. Flavoring agents may include essential oils, synthetic flavors or mixtures thereof including, but not limited to, oils derived from plants and fruits. In addition to spearmint oil, mint oils include peppermint oil, as well as other mint oils. Artificial flavoring agents and components may also be used. Natural and artificial flavoring agents may be combined in any sensorially acceptable fashion.

It should be understood that various changes and modifications to the presently preferred embodiments described herein will be apparent to those skilled in the art. Such changes and modifications can be made without departing from the scope of the present invention covered by the appended claims.

## Claims

1. A method for refining a spearmint oil containing composition that includes sulfur compounds to remove at least a portion of the sulfur compounds comprising the step of:
subjecting the composition to a single vacuum distillation process while maintaining the temperature of the composition below 120°C to remove at least a portion of the sulfur compounds but not more than 3% of the total composition.

2. A method as claimed in Claim 1 wherein the composition consists essentially of spearmint oil.

3. A method as claimed in Claim 1 or Claim 2 wherein more than 0.25% of the composition is removed by the distillation process.

4. A method as claimed in any one of the preceding Claims wherein the pressure during the vacuum distillation process is reduced to less than or equal to 8kPa (60 mmHg).

5. A method as claimed in any one of the Claims 1 to 4 wherein the composition is subjected to a batch vacuum distillation process.

6. A method as claimed in any one of Claims 1 to 4 wherein the composition is subjected to a continuous vacuum distillation process.

7. A method as claimed in any one of Claims 1 to 6 wherein the composition is subjected to a spinning cone distillation.

8. A method as claimed in any one of Claims 1 to 7 wherein the temperature of the composition during the distillation process does not exceed 97°C.

9. A method as claimed in any one of Claims 1 to 8 wherein after the distillation process, the composition includes not more than 75 ppm dimethyl sulfide.

10. A method as claimed in any one of Claims 1 to 9 including the step of measuring dimethyl sulfide in the composition during the distillation process and terminating the process when the dimethyl sulfide content in the composition is less than 40 ppm.

11. A method as claimed in any one of Claims 1 to 10 including the step of agitating a distillation pot including the composition during the distillation process.

12. A method as claimed in any one of Claims 1 to 11 including the step of blanketing a distillation pot including the composition with an inert gas during the distillation process.

13. A method as claimed in any one of Claims 1 to 12 including the step of using during the distillation process a fractionating column including at least one theoretical plate.

14. A method as claimed in any one of Claims 1 to 13 wherein the level of 3-methylbutanal in the composition after the distillation process is not reduced below 100 ppm.

15. A method as claimed in any one of Claims 1 to 3 comprising the steps of:
subjecting a spearmint oil containing composition to a vacuum distillation process wherein the pressure is reduced to less than or equal to 20 kPa (150 mmHg) and the composition is not subjected to a temperature of greater than 120°C and removing during the process sufficient dimethyl sulfide that may be present to provide a refined spearmint oil having a dimethyl sulfide content of less than 75 ppm.

16. A method as claimed in Claim 15 wherein not more than 2% of the distillate is removed.

17. A method as claimed in Claim 16 wherein not more than 1% of the distillate is removed.

18. A method for creating a spearmint flavour chewing gum comprising the steps of:
subjecting a spearmint oil containing composition to a single vacuum distillation process at a temperature not exceeding 120°C and for a sufficient time and at sufficient parameters to achieve ah at least 97% yield of refined spearmint oil having a dimethyl sulfide content of less than 75 ppm, and adding the refined spearmint oil to an insoluble gum base portion and a water soluble portion.

## Patentansprüche

1. Verfahren zum Raffinieren einer Spearmintöl enthaltenden Zusammensetzung, welche Schwefelverbindungen enthält, um mindestens einen Teil der Schwefelverbindungen zu entfernen, umfassend den Schritt:
Unterziehen der Zusammensetzung einem einzelnen Vakuumdestillationsvorgang, während die Temperatur der Zusammensetzung unter 120 °C gehalten wird, um mindestens einen Teil der Schwefelverbindungen, aber nicht mehr als 3 % der gesamten Zusammensetzung zu entfernen.

2. Verfahren wie in Anspruch 1 beansprucht, wobei die Zusammensetzung im Wesentlichen aus Spearmintöl besteht.

3. Verfahren wie in Anspruch 1 oder Anspruch 2 beansprucht, wobei mehr als 0,25 % der Zusammensetzung durch den Destillationsvorgang entfernt wird.

4. Verfahren wie in einem der vorangehenden Ansprüche beansprucht, wobei der Druck während des Vakuumdestillationsvorgangs auf weniger als oder gleich 8 kPa (60 mmHg) vermindert wird.

5. Verfahren wie in einem der Ansprüche 1 bis 4 beansprucht, wobei die Zusammensetzung einem chargenweisen Vakuumdestillationsvorgang unterzogen wird.

6. Verfahren wie in einem der Ansprüche 1 bis 4 beansprucht, wobei die Zusammensetzung einem kontinuierlichen Vakuumdestillationsvorgang unterzogen wird.

7. Verfahren wie in einem der Ansprüche 1 bis 6 beansprucht, wobei die Zusammensetzung einer Spinning-Cone-Destillation unterzogen wird.

8. Verfahren wie in einem der Ansprüche 1 bis 7 beansprucht, wobei die Temperatur der Zusammensetzung während des Destillationsvorgangs 97 °C nicht übersteigt.

9. Verfahren wie in einem der Ansprüche 1 bis 8 beansprucht, wobei die Zusammensetzung nach dem Destillationsvorgang nicht mehr als 75 ppm Dimethylsulfid enthält.

10. Verfahren wie in einem der Ansprüche 1 bis 9 beansprucht, umfassend den Schritt des Messens von Dimethylsulfid in der Zusammensetzung während des Destillationsvorgangs und des Beendens des Vorgangs, wenn der Dimethylsulfidgehalt in der Zusammensetzung weniger als 40 ppm beträgt.

11. Verfahren wie in einem der Ansprüche 1 bis 10 beansprucht, umfassend den Schritt des Rührens eines Destilliertopfes, welcher die Zusammensetzung enthält, während des Destillationsvorgangs.

12. Verfahren wie in einem der Ansprüche 1 bis 11 beansprucht, umfassend den Schritt des Abschirmens eines Destilliertopfes, welcher die Zusammensetzung enthält, mit einem Inertgas während des Destillationsvorgangs.

13. Verfahren wie in einem der Ansprüche 1 bis 12 beansprucht, umfassend den Schritt des Verwendens einer Fraktionierkolonne während des Destillationsvorgangs, die mindestens einen theoretischen Boden umfasst.

14. Verfahren wie in einem der Ansprüche 1 bis 13 beansprucht, wobei der Gehalt an 3-Methytbutanal in der Zusammensetzung nach dem Destillationsvorgang nicht unter 100 ppm verringert ist.

15. Verfahren wie in einem der Ansprüche 1 bis 3 beansprucht, umfassend die Schritte:
Unterziehen einer Spearmintöl enthaltenden Zusammensetzung einem Vakuumdestillationsvorgang, bei dem der Druck auf weniger als oder gleich 20 kPa (150 mmHg) vermindert ist und die Zusammensetzung keiner Temperatur von mehr als 120 °C ausgesetzt ist, und Entfernen von ausreichend Dimethylsulfid, welches vorhanden sein kann, während des Vorgangs, um ein raffiniertes Spearmintöl mit einem Dimethylsulfidgehalt von weniger als 75 ppm bereitzustellen.

16. Verfahren wie In Anspruch 15 beansprucht, wobei nicht mehr als 2 % des Destillats entfernt werden.

17. Verfahren wie in Anspruch 16 beansprucht, wobei nicht mehr als 1 % des Destillats entfernt wird.

18. Verfahren zum Erzeugen eines Kaugummis mit Spearmintaroma, umfassend die Schritte:
Unterziehen einer Spearmintöl enthaltenden Zusammensetzung einem einzelnen Vakuumdestillationsvorgang bei einer Temperatur, die 120 °C nicht übersteigt, und während eines ausreichenden Zeitraums und unter ausreichenden Parametern, um eine mindestens 97 %-ige Ausbeute an raffiniertem Spearmintöl mit einem Dimethylsulfidgehalt von weniger als 75 ppm zu erhalten, und
Zugeben des raffinierten Spearmintöls zu einem unlöslichen Gummibasenanteil und einem wasserlöslichen Anteil.

## Revendications

1. Procédé pour raffiner une composition contenant de l'essence de menthe verte, qui comprend des composés soufrés, pour éliminer au moins une partie des composés soufrés, comprenant l'étape consistant :
à soumettre la composition à un procédé de distillation sous vide unique tout en maintenant la température de la composition au-dessous de 120°C pour éliminer au moins une partie des composés soufrés, mais une quantité non supérieure à 3 % de la composition totale.

2. Procédé suivant la revendication 1, dans lequel la composition consiste essentiellement en l'essence de menthe verte.

3. Procédé suivant la revendication 1 ou la revendication 2 dans lequel une quantité supérieure à 0,25 % de la composition est éliminée par le procédé de distillation.

4. Procédé suivant l'une quelconque des revendications précédentes, dans lequel la pression au cours du procédé de distillation sous vide est réduite à une valeur inférieure ou égale à 8 kPa (60 mmHg).

5. Procédé suivant l'une quelconque des revendications 1 à 4, dans lequel la composition est soumise à un procédé de distillation sous vide discontinu.

6. Procédé suivant l'une quelconque des revendications 1 à 4, dans lequel la composition est soumise à un procédé de distillation sous vide continu.

7. Procédé suivant l'une quelconque des revendications 1 à 6, dans lequel la composition est soumise à une distillation dans un appareil à cône centrifuge.

8. Procédé suivant l'une quelconque des revendications 1 à 7, dans lequel la température de la composition au cours du procédé de distillation n'excède pas 97°C.

9. Procédé suivant l'une quelconque des revendications 1 à 8, dans lequel, après le procédé de distillation, la
composition ne comprend pas plus de 75 ppm de sulfure de diméthyle.

10. Procédé suivant l'une quelconque des revendications 1 à 9, comprenant l'étape consistant à doser le sulfure de diméthyle dans la composition au cours du procédé de distillation et à interrompre le procédé lorsque la teneur en sulfure de diméthyle dans la composition est inférieure à 40 ppm.

11. Procédé suivant l'une quelconque des revendications 1 à 10, comprenant l'étape d'agitation d'un récipient de distillation comprenant la composition au cours du procédé de distillation.

12. Procédé suivant l'une quelconque des revendications 1 à 11, comprenant l'étape consistant à munir d'une atmosphère protectrice un récipient de distillation comprenant la composition en utilisant un gaz inerte au cours du procédé de distillation.

13. Procédé suivant l'une quelconque des revendications 1 à 12, comprenant l'étape d'utilisation, au cours du procédé de distillation, d'une colonne de fractionnement comprenant au moins un plateau théorique.

14. Procédé suivant l'une quelconque des revendications 1 à 13, dans lequel la quantité de 3-méthylbutanol dans la composition après le procédé de distillation n'est pas réduite au-dessous de 100 ppm.

15. Procédé suivant l'une quelconque des revendications 1 à 3, comprenant les étapes consistant :
à soumettre une composition contenant de l'essence de menthe verte à un procédé de distillation sous vide dans lequel la pression est réduite à une valeur inférieure ou égale à 20 kPa (150 mmHg) et la composition n'est pas soumise à une température supérieure à 120°C, et à éliminer au cours du procédé une quantité de sulfure de diméthyle qui peut être présente, suffisante pour produire une essence de menthe verte raffinée ayant une teneur en sulfure de diméthyle inférieure à 75 ppm.

16. Procédé suivant à la revendication 15, dans lequel une quantité non supérieure à 2 % du distillat est éliminée.

17. Procédé suivant à la revendication 16, dans lequel une quantité non supérieure à 1 % du distillat est éliminée.

18. Procédé pour préparer une gomme à mâcher à arôme de menthe verte, comprenant les étapes consistant :
à soumettre une composition contenant de l'essence de menthe verte à un procédé de distillation sous vide unique à une température n'excédant pas 120°C et pendant un temps suffisant et avec des paramètres suffisants pour parvenir à un rendement d'au moins 97 % en essence de menthe verte raffinée ayant une teneur en sulfure de diméthyle inférieure à 75 ppm, et
à ajouter l'essence de menthe verte raffinée à une portion constituée d'une base de gomme insoluble, et à une portion hydrosoluble.
